# EUROPÄISCHE PATENTANMELDUNG

(11) **EP 4 371 716 A1**
(43) Veröffentlichungstag der Anmeldung: **22.05.2024**
(21) Anmeldenummer: 23208013.5
(22) Anmeldetag: 06.11.2023
(51) Int. Cl.: B25J 9/16, B25J 13/08

(54) **VERFAHREN UND VORRICHTUNG ZUM ROBOTERBASIERTEN VEREINZELN VON OBJEKTEN AUS EINEM AUFNAHMEBEHÄLTER**

(30) Priorität: 17.11.2022 DE 102022130461
(71) Anmelder: Aumann AG, 48361 Beelen (DE)
(72) Erfinder: Hartmann, Stefan, 48361 Beelen (DE); Flamme, Jan-Bernd, 48361 Beelen (DE); Fißmer, Marcel, 48361 Beelen (DE)
(74) Vertreter: Bittner, Thomas L.

(57) **Zusammenfassung**

Die Erfindung betrifft ein Verfahren und eine Vorrichtung zum roboterbasierten Vereinzeln von Objekten aus einem Aufnahmebehälter (3). Bei dem Verfahren ist Folgendes vorgesehen: Bereitstellen eines Aufnahmebehälters (3), in welchem zu vereinzelnde Objekte angeordnet sind; und Vereinzeln der Objekte, wobei die Objekte hierbei mit einer an einem Roboterarm (4) angeordneten Greifeinrichtung (6) in dem Aufnahmebehälter (3) einzeln gegriffen, im gegriffenen Zustand mittels des Roboterarms (4) aus dem Aufnahmebehälter (3) entnommen und außerhalb des Aufnahmebehälters (3) von der Greifeinrichtung (6) zum Ablegen, Übergeben oder dergleichen freigegeben werden. Das Vereinzeln umfasst weiterhin Folgendes: Erfassen von Messdaten für eines der Objekte (2) in einer aktuellen Lage in dem Aufnahmebehälter (3) mittels einer Objekterkennungseinrichtung (9) einer dem Roboterarm (4) mit der Greifeinrichtung (6) zugeordneten Steuereinrichtung (8); das Bestimmen mittels der Steuereinrichtung (8), ob das Objekt (2) in der aktuellen Lage in dem Aufnahmebehälter (3) mittels der Greifeinrichtung (6) greifbar ist; Verlagern des Objekts (2) mit Hilfe eines Hilfswerkzeugs (11), welches an dem Roboterarm (4) angeordnet ist, aus der aktuellen Lage in eine geänderte Lage, die von der aktuellen Lage verschieden ist, in dem Aufnahmebehälter (3), wenn bestimmt wird, dass das Objekt (2) in der aktuellen Lage mittels der Greifeinrichtung (6) nicht greifbar ist, wobei das Hilfswerkzeug (11) zum Verlagern des Objekts (2) mittels des Roboterarms (4) bewegt wird; Erfassen von weiteren Messdaten für das Objekt (2) in der geänderten Lage mittels der Objekterkennungseinrichtung (9); Bestimmen mittels der Steuereinrichtung (8), dass das Objekt (2) mit Hilfe der Greifeinrichtung (6) in der geänderten Lage in dem Aufnahmebehälter (3) greifbar ist; und Greifen des Objekts (2) mittels der Greifeinrichtung (6) und Verlagern des Objektes aus dem Aufnahmebehälter (3) heraus umfasst.

## Beschreibung

Die Erfindung betrifft ein Verfahren und eine Vorrichtung zum roboterbasierten Vereinzeln von Objekten, die in einem Aufnahmebehälter angeordnet sind.

### Hintergrund

Zur Vereinzelung von Objekten, die in einem Aufnahmebehälter angeordnet sind, beispielsweise einer Kiste, werden roboterbasierte Vorrichtungen verwendet, bei denen an einem Roboterarm eine Greifeinrichtung angeordnet ist. Eine zugeordnete Steuereinrichtung dient dazu, den Roboterarm mit der Greifeinrichtung zum Greifen der Objekte in dem Aufnahmebehälter zu steuern. Die Objekte werden nach dem Greifen aus dem Aufnahmebehälter herausgeführt und außerhalb des Aufnahmebehälters von der Greifeinrichtung freigegeben, zum Beispiel abgelegt. Dieses wird allgemein auch als "bin picking" (Griff in die Kiste) bezeichnet.

Eine typische Anwendung betrifft das Vereinzeln von Werkstücken, die in einer Kiste aufgenommen sind, beispielsweise in zufälliger oder chaotischer Anordnung, insbesondere zum Transport. Um die Werkstücke be- und / oder verarbeiten zu können, werden diese mit Hilfe der am Roboterarm angeordneten Greifeinrichtung einzeln aus der Kiste entnommen. Hierbei wird die Greifeinrichtung an dem Roboterarm im Raum bewegt.

Beim Vereinzeln der Objekte kommt es häufig dazu, dass letzte noch im Aufnahmebehälter befindliche Objekte nicht greifbar sind, beispielsweise weil sie in Eck- oder Wandbereichen des Aufnahmebehälters angeordnet und so für die Greifeinrichtung nicht greifbar sind. Um solche Objekte aus einer derartigen aktuellen Lage in eine geänderte Lage zu bringen, in welcher das Objekt dann greifbar ist, wurde vorgeschlagen, den Aufnahmebehälter auf einer Rütteleinrichtung anzuordnen, derart, dass mittels Rütteln des Aufnahmebehälters die Objekte in eine Lage gebracht werden, in welcher sie mit der Greifeinrichtung greifbar sind. Dieses erfordert jedoch das zusätzliche Bereitstellen und Betreiben der Rütteleinrichtung.

Die Druckschrift DE 10 2018 000 730 B4 betrifft eine Werkstückaufnahmevorrichtung, umfassend einen Sensor, der eine Mehrzahl von Werkstücken misst, die in einem dreidimensionalen Raum wahllos gestapelt sind; einen Roboter, der die Werkstücke hält; eine Hand, die an dem Roboter montiert ist; eine Einheit zum Berechnen einer Haltepositionslage; eine Einheit zum Generieren eines Vorgangs zum Verbessern eines Ladezustands; eine Robotersteuereinheit, die den Roboter und die Hand steuert, eine Einheit zum Ausgeben von Vorgangskandidaten; und eine Vorgangsbestimmungseinheit, die einen Vorgang aus dem mindestens einen Vorgangskandidaten bestimmt, der von der Einheit zum Ausgeben von Vorgangskandidaten ausgegeben wird, und den Roboter über die Robotersteuereinheit auf der Grundlage des bestimmten Vorgangs steuert.

In der Druckschrift DE 10 2016 005 637 B4 ist ein System zum Aufnehmen von Gegenständen zum Aufnehmen von gestapelten Gegenständen offenbart, wobei der Gegenstand mit einem Durchgangsloch an einer von dem Schwerpunkt des Gegenstands separaten Position ausgebildet ist.

In der Druckschrift DE 10 2016 000 611 A1 wird eine Anordnung für die automatisierte Erfassung und Entnahme von Werkstücken aus einer ungeordneten Ansammlung beschrieben.

Die Druckschrift EP 2 364 823 B1 offenbart ein Robotersystem und ein Transferverfahren, mittels welchen ein Werkstück aus einem Behälter präziser entnommen werden kann, während eine fehlerhafte Operation während der Handhabung so weit wie möglich reduziert wird.

Die Druckschrift EP 1 442 848 B1 hat eine Vorrichtung zum Entnehmen von Gegenständen, die in einem Behälter gestapelt sind, zum Gegenstand.

In der Druckschrift US 2015 / 0 039 129 A1 wird ein Robotersystem beschrieben, umfassend einen Roboter, einen Behälter, einen Determinator, eine Bewegungssteuerung, einen Drehmomentbegrenzer und eine Rührbetriebssteuerung. Der Roboter enthält eine Antriebsquelle zum Antrieb eines Gelenkteils und einen Endeffektor. Der Determinator bestimmt, ob ein Werkstück, das von dem Endeffektor gehalten werden kann, unter den im Behälter untergebrachten Werkstücken vorhanden ist.

### Zusammenfassung

Aufgabe der Erfindung ist es, ein Verfahren und eine Vorrichtung zum roboterbasierten Vereinzeln von Objekten in oder aus einem Aufnahmebehälter anzugeben, mit denen auch zunächst nicht greifbare Objekte auf zuverlässige und einfache Art vereinzelt werden können, insbesondere zum Herausnehmen aus dem Aufnahmebehälter.

Zur Lösung sind ein Verfahren und eine Vorrichtung zum roboterbasierten Vereinzeln von Objekten aus einem Aufnahmebehälter nach den unabhängigen Ansprüchen 1 und 12 geschaffen. Ausgestaltungen sind Gegenstand von abhängigen Unteransprüchen.

Nach einem Aspekt ist ein Verfahren zum roboterbasierten Vereinzeln von Objekten aus oder in einem Aufnahmebehälter geschaffen, wobei Folgendes vorgesehen ist: Bereitstellen eines Aufnahmebehälters, in welchem zu vereinzelnde Objekte angeordnet sind; und Vereinzeln der Objekte, wobei die Objekte hierbei mit einer an einem Roboterarm angeordneten Greifeinrichtung in dem Aufnahmebehälter einzeln gegriffen, im gegriffenen Zustand mittels des Roboterarms aus dem Aufnahmebehälter entnommen und außerhalb des Aufnahmebehälters von der Greifeinrichtung zum Ablegen, Übergeben oder dergleichen freigegeben werden. Das Vereinzeln umfasst weiterhin Folgendes: Erfassen von Messdaten für eines der Objekte in einer aktuellen Lage in dem Aufnahmebehälter mittels einer Objekterkennungseinrichtung einer dem Roboterarm mit der Greifeinrichtung zugeordneten Steuereinrichtung; Bestimmen mittels der Steuereinrichtung, ob das Objekt in der aktuellen Lage in dem Aufnahmebehälter mittels der Greifeinrichtung greifbar ist; Verlagern des Objekts mit Hilfe eines Hilfswerkzeugs, welches an dem Roboterarm angeordnet ist, aus der aktuellen Lage in eine geänderte Lage, die von der aktuellen Lage verschieden ist, in dem Aufnahmebehälter, wenn bestimmt wird, dass das Objekt in der aktuellen Lage mittels der Greifeinrichtung nicht greifbar ist, wobei das Hilfswerkzeug zum Verlagern des Objekts mittels des Roboterarms bewegt wird; Erfassen von weiteren Messdaten für das Objekt in der geänderten Lage mittels der Objekterkennungseinrichtung; Bestimmen mittels der Steuereinrichtung, dass das Objekt mit Hilfe der Greifeinrichtung in der geänderten Lage in dem Aufnahmebehälter greifbar ist; und Greifen des Objekts mittels der Greifeinrichtung und Verlagern des Objektes aus dem Aufnahmebehälter heraus.

Nach einem weiteren Aspekt ist eine Vorrichtung zum roboterbasierten Vereinzeln von Objekten in einem Aufnahmebehälter vorgesehen, die Folgendes aufweist: einen Roboterarm; eine Greifeinrichtung, die an dem Roboterarm angeordnet und mittels des Roboterarms räumlich verlagerbar ist; eine Steuereinrichtung, die dem Roboterarm mit der Greifeinrichtung zum Steuern eines Betriebs zugeordnet ist; und eine Objekterkennungseinrichtung, die mit der Steuereinrichtung gebildet und eingerichtet ist, in einem Aufnahmebehälter angeordnete Objekte zu erfassen. Die Vorrichtung ist eingerichtet, die Objekte aus dem Aufnahmebehälter zu vereinzeln, wobei die Objekte hierbei mit der an dem Roboterarm angeordneten Greifeinrichtung in dem Aufnahmebehälter einzeln gegriffen, im gegriffenen Zustand mittels des Roboterarms aus dem Aufnahmebehälter entnommen und außerhalb des Aufnahmebehälters von der Greifeinrichtung zum Ablegen, Übergeben oder dergleichen freigegeben werden. Die Vorrichtung ist zum Vereinzeln der Objekte weiterhin für Folgendes eingerichtet: Erfassen von Messdaten für eines der Objekte in einer aktuellen Lage in dem Aufnahmebehälter mittels einer Objekterkennungseinrichtung einer dem Roboterarm mit der Greifeinrichtung zugeordneten Steuereinrichtung; Bestimmen mittels der Steuereinrichtung, ob das Objekt in der aktuellen Lage in dem Aufnahmebehälter mittels der Greifeinrichtung greifbar ist; Verlagern des Objekts mit Hilfe eines Hilfswerkzeugs, welches an dem Roboterarm angeordnet ist, aus der aktuellen Lage in eine geänderte Lage, die von der aktuellen Lage verschieden ist, in dem Aufnahmebehälter, wenn bestimmt wird, dass das Objekt in der aktuellen Lage mittels der Greifeinrichtung nicht greifbar ist, wobei das Hilfswerkzeug zum Verlagern des Objekts mittels des Roboterarms bewegt wird; Erfassen von weiteren Messdaten für das Objekt in der geänderten Lage mittels der Objekterkennungseinrichtung; Bestimmen mittels der Steuereinrichtung, dass das Objekt mit Hilfe der Greifeinrichtung in der geänderten Lage in dem Aufnahmebehälter greifbar ist; und Greifen des Objekts mittels der Greifeinrichtung und Verlagern des Objektes aus dem Aufnahmebehälter heraus.

Mit Hilfe des Verfahrens und der Vorrichtung ist es ermöglicht, zum roboterbasierten Vereinzeln der Objekte, die in einem Aufnahmebehälter angeordnet sind, beispielsweise einer Kiste, Objekte, die in dem Aufnahmebehälter zunächst in einer Lage angeordnet sind, in welcher die Objekte mit Hilfe der Greifeinrichtung nicht greifbar sind, auf zuverlässige und einfache Art und Weise in eine geänderte Lage oder Position zu verlagern, in der das Objekt dann mittels der Greifeinrichtung zum Vereinzeln gegriffen werden kann. Hierzu ist die Nutzung des Hilfswerkzeugs vorgesehen, welches eingerichtet ist, das zunächst nicht greifbare Objekt innerhalb des Aufnahmebehälters zu verlagern, so dass das Objekt dann mittels der Greifeinrichtung am Roboterarm greifbar ist.

Zum Bestimmen, ob ein konkretes Objekt in seiner aktuellen Lage in dem Aufnahmebehälter greifbar ist, ist die dem Roboterarm mit der Greifeinrichtung zugeordnete Steuereinrichtung mit einer Objekterkennungseinrichtung gebildet, mit der für das Objekt Messdaten erfasst werden können, die mittels der Steuereinrichtung auswertbar sind, um festzustellen oder zu bestimmen, ob das Objekt, für welches die Messdaten erfasst wurden, in seiner aktuellen oder momentanen Lage mittels der Greifeinrichtung greifbar ist. Wenn sich ergibt, dass dies nicht der Fall ist, wird das Objekt mit Hilfe des Hilfswerkzeugs verlagert, wobei das Hilfswerkzeug mittels des Roboterarms eingesetzt wird, welcher im Betrieb seinerseits, wie auch die Greifeinrichtung, mit Hilfe der zugeordneten Steuereinrichtung gesteuert wird, wie dies als solches für Roboterarme in verschiedenen Ausführungsformen bekannt ist. Auch sind Anordnungen mit Roboterarm, Greifeinrichtung sowie zugeordneter Steuereinrichtung als solche in unterschiedlichen Ausgestaltungen bekannt. Dieses gilt ebenso für Objekterkennungseinrichtungen, mit denen für beliebige räumliche Objekte, beispielsweise Werkstücke oder Halbzeuge, Messdaten zur Objekterkennung erfasst werden können, insbesondere zum Bestimmen einer Lage und / oder Orientierung des Objekts in einem Messraum, zum Beispiel dem Innenraum des Aufnahmebehälters.

Das Hilfswerkzeug kann an einem Endeffektor angeordnet oder ein Teil hiervon sein, welcher an dem Roboterarm aufgenommen und mit Hilfe des Roboterarms räumlich verlagerbar ist.

Das Hilfswerkzeug kann am Roboterarm getrennt von Greifelementen der Greifeinrichtung gebildet und angeordnet sein, die eingerichtet sind, die Objekte in dem Aufnahmebehälter zum Vereinzeln zu greifen oder zu spannen und zu halten. Das Hilfswerkzeug kann teilweise oder vollständig getrennt von der Greifeinrichtung gebildet und am Roboterarm angeordnet sein. Aber auch eine Anordnung des Hilfswerkzeugs an den Greifelementen kann vorgesehen sein, sei es mittels einer lösbaren oder nicht-lösbaren Verbindung an der Greifeinrichtung.

Es kann in einer Ausgestaltung vorgesehen sein, dass auf das Erkennen von mehreren Objekten, die in ihrer jeweiligen aktuellen Lage nicht greifbar sind, zunächst die mehreren Objekte jeweils mittels des Hilfswerkzeugs verlagert werden, sei es mittels einer oder mehrerer Verlagerungsbewegungen des Hilfswerkzeugs, derart, dass die Objekte in der geänderten Lage greifbar sind, um nach der Verlagerung der mehreren Objekte diese mittels Betätigen der Greifeinrichtung zu vereinzeln.

Objekterkennungseinrichtung und Steuereinrichtung sind zusammen eingerichtet, die Messdaten für die Objekte zu erfassen und auszuwerten, um hieraus Steuersignale für die räumliche Verlagerung der Greifeinrichtung und des Hilfswerkzeugs zu bestimmen. Funktionale Komponenten, seien es Hardware- und / oder Software-Komponenten, können mit Objekterkennungseinrichtung und Steuereinrichtung integriert zusammen oder getrennt hiervon gebildet sein. Hierbei kann die Steuereinrichtung eingerichtet sein, die Steuerung für den Roboterarm zumindest teilweise direkt zu übernehmen.

Das Hilfswerkzeug kann an dem Roboterarm lösbar angeordnet werden. Die lösbare Anordnung oder Montage des Hilfswerkzeugs an dem Roboterarm ermöglicht es beispielsweise, je nach Anwendungsfall, unterschiedliche Hilfswerkzeuge an dem Roboterarm anzubringen und wieder hiervon zu lösen. Hierbei kann das Hilfswerkzeug an dem Endeffektor, zum Beispiel im Bereich der Greifeinrichtung selbst, lösbar angeordnet werden.

Das Hilfswerkzeug kann vor dem Verlagern des Objekts an dem Roboterarm lösbar angeordnet und nach dem Verlagern des Objekts wieder vom Roboterarm gelöst werden. Bei dieser Ausführungsform ist das Hilfswerkzeug nur dann an dem Roboterarm angeordnet, zum Beispiel an dem Endeffektor, wenn konkret eine Verlagerung eines Objekts in dem Aufnahmebehälter anliegt, für welches eine aktuelle Lage erkannt wurde, in der das Objekt mittels der Greifeinrichtung nicht greifbar ist. Nach einem einmaligen oder mehrmaligen Verlagern eines oder mehrerer Objekte wird das Hilfswerkzeug wieder von dem Roboterarm getrennt, zum Beispiel abgelegt.

Dieses ermöglicht es auch, in einer Ausgestaltung ein Hilfswerkzeug aus einer Gruppe von Hilfswerkzeugen in Abhängigkeit von einer aktuellen bestimmten Lage des Objekts auszuwählen und für das Verlagern des Objekts an dem Roboterarm lösbar anzuordnen. Unterschiedliche Hilfswerkzeuge, die sich beispielsweise hinsichtlich ihrer geometrischen Formausbildung und / oder Abmessungen unterscheiden, können je nach Anwendungsfall ausgewählt und genutzt werden. Wird zum Beispiel eine erste aktuelle Lage erkannt, kann ein erstes Hilfswerkzeug ausgewählt und zum Verlagern des Objekts verwendet werden. Wird eine zweite aktuelle Lage des Objekts erkannt, die von der ersten aktuellen Lage verschieden ist, beispielsweise hinsichtlich eines Abstandes zu einem Eck- und / oder Wandbereich des Aufnahmebehälters, kann ein zweites Hilfswerkzeug ausgewählt und verwendet werden, welches von dem ersten Hilfswerkzeug verschieden ist. Die Steuereinrichtung kann eingerichtet sein, die für das Objekt mit Hilfe der Objekterkennungseinrichtung erfassten Messdaten entsprechend auszuwerten, um zum Beispiel die erste oder die zweite aktuelle Lage für das Objekt zu bestimmen und wahlweise automatisch das erste oder das zweite Hilfswerkzeug aufzugreifen.

Das Hilfswerkzeug kann vor dem Verlagern des Objekts mittels der Greifeinrichtung gegriffen, während des Verlagerns des Objekts von der Greifeinrichtung gehalten und nach dem Verlagern des Objekts zum Lösen von der Greifeinrichtung wieder von der Greifeinrichtung freigegeben werden. Bei dieser Ausführungsform wird die Greifeinrichtung selbst verwendet, um das Hilfswerkzeug zum Zwecke der Objektverlagerung aus der aktuellen in die geänderte Lage zu greifen und zu halten. Alternativ oder ergänzend kann das Hilfswerkzeug beispielsweise mit Hilfe einer magnetischen Kopplung an dem Roboterarm lösbar gehalten werden. Bei einer beispielhaften Verwendung eines Elektromagneten kann dieser zum Aufnehmen oder Anordnen des Hilfswerkzeugs an dem Roboterarm mit Strom beaufschlagt werden. Um das Hilfswerkzeug dann wieder freizugeben, kann die Strombeaufschlagung beendet werden.

Beim Vereinzeln der Objekte kann weiterhin Folgendes vorgesehen sein: Bestimmen mittels der Steuereinrichtung, ob für das Objekt in der aktuellen Lage eine Objektart bestimmt werden kann, für welche in der Steuereinrichtung die Objektart identifizierende Objektartdaten bereitgestellt werden; Bestimmen mittels der Steuereinrichtung, dass das Objekt mittels der Greifeinrichtung in seiner aktuellen Lage in dem Aufnahmebehälter nicht greifbar ist, wenn für das Objekt die Objektart nicht bestimmt werden kann und das Objekt somit nicht greifbar ist; Bestimmen mittels der Steuereinrichtung, ob für das Objekt in der geänderten Lage die Objektart bestimmt werden kann; und Greifen des Objekts mittels der Greifeinrichtung und Verlagern des Objektes aus dem Aufnahmebehälter heraus, wenn für das Objekt in der geänderten Lage die Objektart bestimmt wird. Bei dieser Ausführungsform ist das Objekt aufgrund der von der Objekterkennungseinrichtung erfassten Messdaten nicht identifizierbar oder erkennbar, also der Objektart, welche anhand der identifizierenden Objektartdaten spezifiziert ist, nicht zuordenbar. Basierend hierauf bestimmt die Steuereinrichtung, dass das Objekt in der aktuellen Lage nicht greifbar ist. Sodann wird das Objekt mit Hilfe des Hilfswerkzeugs verlagert, um in der geänderten Lage zu bestimmen, dass das Objekt der Objektart entspricht, was bei diesem Ausführungsbeispiel die Greifbarkeit mit der Greifeinrichtung injiziert, wobei das Objekt in der geänderten Lage nicht nur der Objektart zuordenbar ist, sondern auch als greifbar mit der Greifeinrichtung bestimmt wird.

Das Objekt in dem Aufnahmebehälter kann mit Hilfe der Erfassungseinrichtung mittels eines bildgebenden Verfahrens erfasst oder bestimmt werden. Zum Ausführen des bildgebenden Verfahrens kann die Objekterfassungseinrichtung beispielsweise mit einer oder mehreren Kameras gebildet sein, um für das Objekt Bilddaten zu erfassen. Bei dieser oder anderen Ausgestaltungen kann die Objekterfassungseinrichtung eingerichtet sein, eine räumliche Lage für das Objekt zu bestimmen.

Die Objekte in dem Aufnahmebehälter können vor dem Vereinzeln einer zufälligen oder chaotischen Anordnung entsprechend angeordnet werden. Entgegen einer geordneten Anordnung sind die Objekte hierbei ungeordnet in dem Aufnahmebehälter abgelegt.

Die Objekte in dem Aufnahmebehälter können Teile eines Schüttguts sein. Das Schüttgut kann beispielsweise von Werkstücken oder Halbzeugen gebildet sein.

Als Hilfswerkzeug kann ein Flachwerkzeug verwendet werden, welches eingerichtet ist, das Objekt insbesondere aus einer Randlage benachbart zu einer aufrechten Wandung des Aufnahmebehälters oder einer Ecklage in dem Aufnahmebehälter heraus zu verlagern. Insbesondere bei Rand und / oder Ecklage kann das Objekt mit Hilfe des als Flachwerkzeug ausgeführten Hilfswerkzeug effizient und zuverlässig in eine greifbare Lage gebracht werden.

Das Hilfswerkzeug kann zumindest abschnittsweise aus einem flexiblen Material sein, beispielsweise einem flexibel biegbaren Blechmaterial, so dass das Hilfswerkzeug bei mechanischer Kollision wie Stößen flexibel nachgibt und so nicht beschädigt wird, wenn das Hilfswerkzeug bei der räumlichen Verlagerung mittels des Roboterarms zum Beispiel unbeabsichtigt gegen den Aufnahmebehälter stößt. Zum Beispiel kann ein vorderer Endabschnitt des Hilfswerkzeugs, welches beim Einsatz mit dem zu verlagernden Objekt regelmäßig in Kontakt kommt, aus dem flexiblen Material sein.

Als Flachwerkzeug kann ein Kratzwerkzeug verwendet werden. Mit Hilfe des Kratzwerkzeugs kann das Objekt aus der aktuellen, nicht greifbaren Lage in die veränderte Lage "ausgekratzt werden".

Die Greifeinrichtung kann mit einem Parallelgreifer gebildet sein. Alternativ oder ergänzend kann die Greifeinrichtung mit einem Magnetgreifer und / oder einem Vakuumgreifer gebildet sein. Die Greifeinrichtung kann in den verschiedenen Ausgestaltungen eingerichtet sein, die Objekte und / oder das Hilfswerkzeug gemäß zumindest einer der folgenden Greifarten entsprechend zu greifen oder zu spannen: mechanisch, magnetisch, pneumatisch, kraftschlüssig und formschlüssig.

In den verschiedenen Ausgestaltungen kann der Roboterarm als ein Mehrachsensystem mit mindestens vier Freiheitsgraden ausgebildet sein, zum Beispiel drei translatorischen und einem rotatorischem Freiheitsgrad für die Bewegung der Greifeinrichtung.

Die Objekterkennungseinrichtung kann teilweise oder vollständig an dem Roboterarm angeordnet sein, oder getrennt hiervon, zum Beispiel an einer Stativeinrichtung. Ist die Objekterkennungseinrichtung oder Teile hiervon an dem Roboterarm aufgenommen, wird / werden diese mit dem Roboterarm mitbewegt.

Die Objekterkennungseinrichtung kann teilweise oder vollständig gemeinsam mit dem Roboterarm an einer diese tragenden Trageinrichtung angeordnet sein, zum Beispiel einer Tragkonstruktion.

Der Endeffektor mit der Greifeinrichtung kann an dem Roboterarm wechselbar oder nicht wechselbar angeordnet sein. Im Fall der Wechselbarkeit kann der Endeffektor über ein Schnellwechselsystem mit dem Roboterarm verbunden sein.

Es kann vorgesehen sein, dass die Objekterkennungseinrichtung eingerichtet ist, vor dem Vereinzeln der Objekte, für den Aufnahmebehälter eine Behälterlage oder -position zwei- oder dreidimensional zu erfassen oder zu detektieren. Im Fall der Ausbildung des Aufnahmebehälters als Kiste kann so eine Kistenposition erfasst werden. Dieses Messergebnis kann für eine Vor- oder Grobpositionierung des Roboterarms mit der Greifeinrichtung zum folgenden Vereinzeln der Objekte aus dem Aufnahmebehälter verwendet werden.

In Verbindung mit der Vorrichtung zum roboterbasierten Vereinzeln von Objekten in oder aus dem Aufnahmebehälter können die vorangehend im Zusammenhang mit dem Verfahren erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Vorrichtung zum roboterbasierten Vereinzeln von Objekten in einem Aufnahmebehälter;
- Fig. 2: perspektivische Darstellungen eines Roboterarms mit Greifeinrichtung sowie einem Hilfswerkzeug, welches mit der Greifeinrichtung gegriffen oder getrennt hiervon dargestellt ist; und
- Fig. 3: eine schematische Darstellung einer weiteren Anordnung mit einer Vorrichtung zum roboterbasierten Vereinzeln von Objekten in einem Aufnahmebehälter.

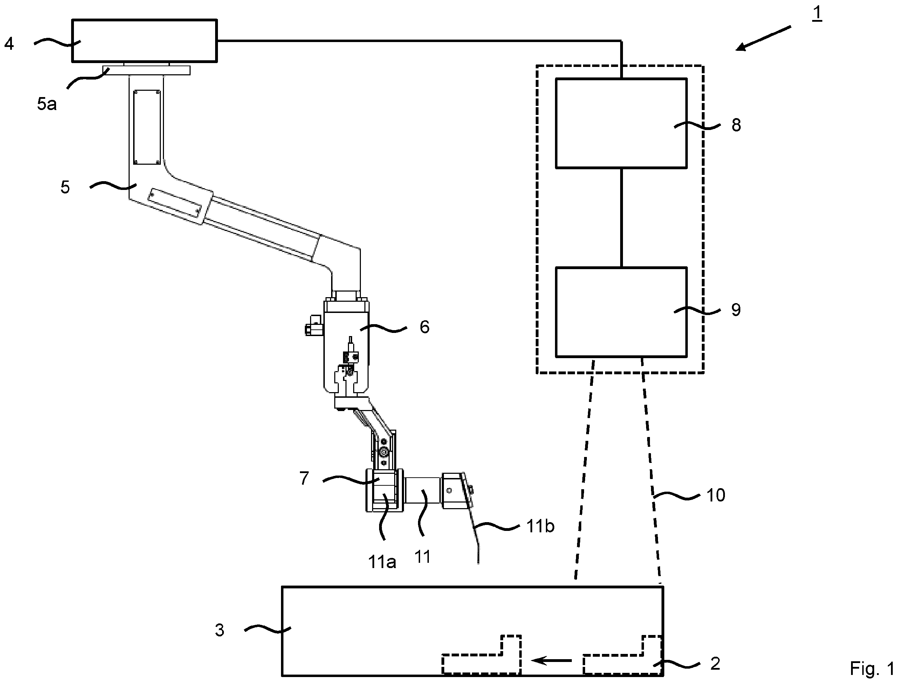

Fig. 1 zeigt eine schematische Darstellung einer Anordnung mit einer Vorrichtung 1 zum Vereinzeln von Objekten 2, die in einem Aufnahmebehälter 3 angeordnet sind, beispielsweise einer Kiste. Bei den Objekten 2 handelt es sich zum Beispiel um Werkstücke, die mit Hilfe des Aufnahmebehälters 3 transportiert werden, um sie an einem Zielort zu vereinzeln, indem die Objekte 2 aus dem Aufnahmebehälter 3 entnommen werden. Auf diese Weise können Werkstücke beispielsweise einer Be- oder Weiterverarbeitung zugeführt werden. Nach dem Aufnehmen aus dem Aufnahmebehälter 3 könnten die Objekte 2 außerhalb des Aufnahmebehälters 3 abgelegt oder übergeben werden, zum Beispiel an einen anderen Greifer (nicht dargestellt).

Die Vorrichtung 1 weist einen in Fig. 1 schematisch dargestellten Roboterarm 4 auf, welcher verkürzt auch als Roboter bezeichnet werden kann. Mit dem ist ein an dem Roboterarm 4 endseitig angeordneter Endeffektor 5 mit einer Greifeinrichtung 6 räumlich verlagerbar, wie dies im Zusammenhang mit Roboterarmen und einem Endeffektor als solches in verschiedenen Ausgestaltungen bekannt ist. Beim gezeigten Beispiel koppelt der Endeffektor 5 über einen Flansch 5a an den Roboterarm 4. Die Verbindung des Endeffektors 5 an den Roboterarm 4 kann zum Beispiel mittels eines Schnellwechselsystems ausgeführt sein, was ein Lösen des Endeffektors 5 vom Roboterarm 4 ermöglicht, beispielsweise zum Wechseln des Endeffektors.

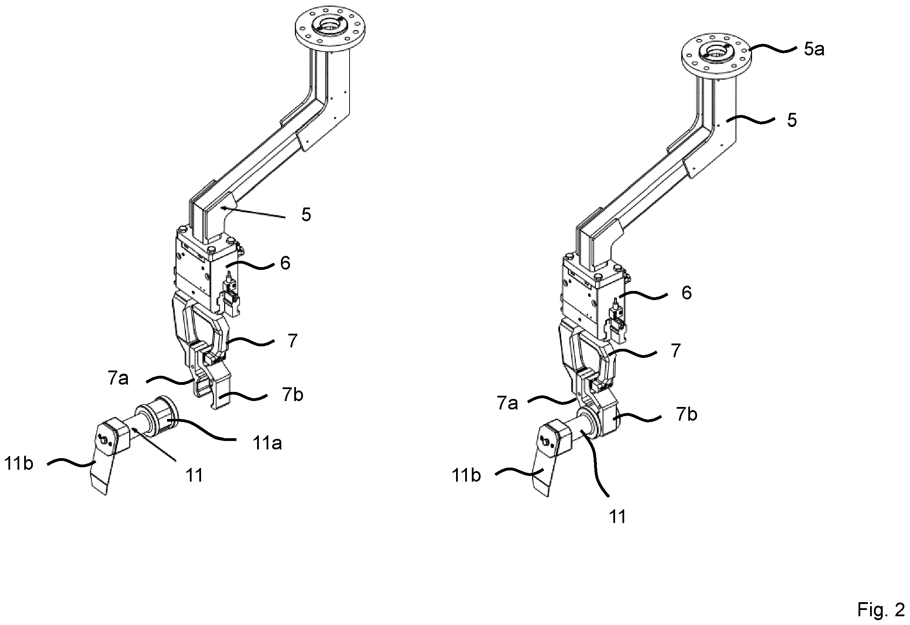

Die Greifeinrichtung 6 ist bei dem dargestellten Ausführungsbeispiel mit einem Parallelgreifer 7 gebildet, welcher einander gegenüberliegende Greif- oder Spannelemente 7a, 7b aufweist, wie dies in Fig. 2 erkennbar ist.

Dem Roboterarm 4 ist eine Steuereinrichtung 8 zugeordnet, die eingerichtet ist, den Roboterarm 4 zu betreiben, derart, dass der Endeffektor 5 mit der Greifeinrichtung 6 räumlich verlagert wird. Auch ist die Steuereinrichtung 8 eingerichtet, die Greifeinrichtung 6 zum Greifen und Halten der Objekte 2 und deren Freigabe zu steuern.

Der Steuereinrichtung 8 ist eine Objekterkennungseinrichtung 9 zugeordnet, die wahlweise zumindest teilweise mit der Steuereinrichtung 8 integriert (vgl. gestrichelte Umrandung in Fig. 1) oder getrennt von der Steuereinrichtung 8 gebildet ist. Mit Hilfe der Objekterkennungseinrichtung 9 werden für die Objekte 2 in dem Aufnahmebehälter 3 Messdaten erfasst, was in Fig. 1 schematisch mittels gestrichelter Linien 10 gezeigt ist. Zum Erfassen der Messdaten kann die Objekterkennungseinrichtung 9 zum Beispiel eine oder mehrere Kameras (Bildaufnahmeeinrichtung, nicht dargestellt) aufweisen, um Bilddaten zu erfassen.

Um die Erfassung der Bilddaten zu unterstützen, zum Beispiel bei ungünstigen Umgebungslichtverhältnissen, kann der Objekterkennungseinrichtung 9 eine Projektionseinrichtung (nicht dargestellt) zugeordnet sein, die eingerichtet ist, beim Erfassen der Bilddaten strukturiertes Licht auf die zu erfassenden Objekte zu projizieren, zum Beispiel in Form Streifenlicht.

Die Messdaten sind zum Bestimmen einer räumlichen Lage des Objekts 2 in dem Aufnahmebehälter 3 auswertbar. Die Lagebestimmung kann teilweise oder vollständig von der Objekterkennungseinrichtung 9 selbst und / oder der Steuereinrichtung 8 vorgenommen werden. Wahlweise kann vorgesehen sein, dass beim Verarbeiten der Messdaten von der Objekterkennungseinrichtung 9 und / oder der Steuereinrichtung 8 auf elektronische Daten in einer entfernten Servereinrichtung (nicht dargestellt) zurückgegriffen wird.

Mit der Vorrichtung 1 können die Objekte 2 aus dem Aufnahmebehälter 3 vereinzelt werden. Wenn hierbei auf Basis der von der Objekterkennungseinrichtung 9 erfassten Messdaten bestimmt wird, dass das Objekt 2 aktuell in einer Position oder Lage ist, in welcher das Objekt 2 mittels der Greifeinrichtung 6 nicht gegriffen werden kann, wird das Objekt 2 innerhalb des Aufnahmebehälters 3 verlagert, derart, dass das Objekt 2 danach in einer geänderten Lage oder Position ist, in welcher das Objekt 2 mittels der Greifeinrichtung 6 greifbar ist. Hierzu wird ein Hilfswerkzeug 11 genutzt, welches die Greifeinrichtung 6 an dem Roboterarm 4 greift, nachdem für das Objekt 2 die Nichtgreifbarkeit in der aktuellen Lage festgestellt wurde. Mit Hilfe der Steuereinrichtung 8 wird die Greifeinrichtung 6 am Roboterarm 4 mit dem Hilfswerkzeug 11 verlagert und genutzt, um das Objekt 2 innerhalb des Aufnahmebehälters 3 zu verlagern. Die Steuereinrichtung 8 kann hierbei direkt mit der Greifeinrichtung 6 oder über eine interne Steuerung des Roboterarms 4 indirekt verbunden sein.

Wird sodann für die geänderte Lage des Objekts 2 mit Hilfe der Objekterkennungseinrichtung 9 und der Steuereinrichtung 8 festgestellt, dass das Objekt 2 nun greifbar ist, wird das Objekt 2 mit der Greifeinrichtung 6 gegriffen und gehalten und aus dem Aufnahmebehälter 3 entnommen, nachdem zuvor das Hilfswerkzeug 11 wieder von der Greifeinrichtung 6 freigegeben wurde.

Das Hilfswerkzeug 11 weist bei der dargestellten Ausführungsform einen Griffabschnitt 11a sowie eine Werkzeugzunge 11b auf. Der Griffabschnitt 11a ist eingerichtet, mit der Greifeinrichtung 6 gegriffen zu werden. Die Werkzeugzunge 11b ist eingerichtet, mit dem zu verlagernden Objekt 2 in Kontakt zu kommen, um dieses aus der aktuellen Lage in die veränderte Lage zu verlagern, beispielsweise aus einer Eck- und / oder Randlage im Aufnahmebehälter 3 heraus.

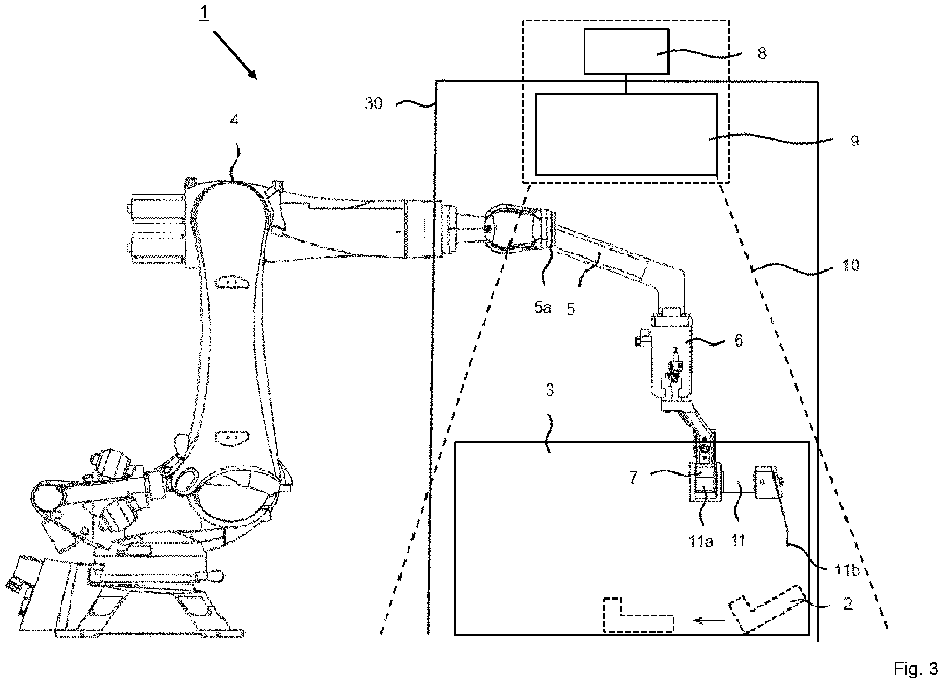

Fig. 3 zeigt eine schematische Darstellung einer weiteren Anordnung mit einer Vorrichtung 1 zum roboterbasierten Vereinzeln von Objekten 2 in einem Aufnahmebehälter 3. Für gleiche Merkmale werden dieselben Bezugszeichen wie in den Fig. 1 und 2 verwendet. Bei dem gezeigten Ausführungsbeispiel sind die Steuereinrichtung 8 und die Objekterkennungseinrichtung 9 an einer Trageinrichtung 30 angeordnet, die zum Beispiel mit einem Portal oder Ständer gebildet sein kann. Der Aufnahmebehälter 3 wird zum Vereinzeln der Objekte 2 im Wesentlichen unterhalb der Objekterkennungseinrichtung 9 angeordnet. Die gestrichelten Linien 10 zeigen beispielhaft einen möglichen Erfassungsbereich der Objekterkennungseinrichtung 9, zum Beispiel einen Erfassungsbereich einer oder mehrerer Kameras für Bildaufnahmen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum roboterbasierten Vereinzeln von Objekten aus einem Aufnahmebehälter, mit:
- Bereitstellen eines Aufnahmebehälters (3), in welchem zu vereinzelnde Objekte angeordnet sind; und
- Vereinzeln der Objekte, wobei die Objekte hierbei mit einer an einem Roboterarm (4) angeordneten Greifeinrichtung (6) in dem Aufnahmebehälter (3) einzeln gegriffen, im gegriffenen Zustand mittels des Roboterarms (4) aus dem Aufnahmebehälter (3) entnommen und außerhalb des Aufnahmebehälters (3) von der Greifeinrichtung (6) zum Ablegen, Übergeben oder dergleichen freigegeben werden, und wobei das Vereinzeln weiterhin Folgendes umfasst:
- Erfassen von Messdaten für eines der Objekte (2) in einer aktuellen Lage in dem Aufnahmebehälter (3) mittels einer Objekterkennungseinrichtung (9) einer dem Roboterarm (4) mit der Greifeinrichtung (6) zugeordneten Steuereinrichtung (8);
- Bestimmen mittels der Steuereinrichtung (8), ob das Objekt (2) in der aktuellen Lage in dem Aufnahmebehälter (3) mittels der Greifeinrichtung (6) greifbar ist;
- Verlagern des Objekts (2) mit Hilfe eines Hilfswerkzeugs (11), welches an dem Roboterarm (4) angeordnet ist, aus der aktuellen Lage in eine geänderte Lage, die von der aktuellen Lage verschieden ist, in dem Aufnahmebehälter (3), wenn bestimmt wird, dass das Objekt (2) in der aktuellen Lage mittels der Greifeinrichtung (6) nicht greifbar ist, wobei das Hilfswerkzeug (11) zum Verlagern des Objekts (2) mittels des Roboterarms (4) bewegt wird;
- Erfassen von weiteren Messdaten für das Objekt (2) in der geänderten Lage mittels der Objekterkennungseinrichtung (9);
- Bestimmen mittels der Steuereinrichtung (8), dass das Objekt (2) mit Hilfe der Greifeinrichtung (6) in der geänderten Lage in dem Aufnahmebehälter (3) greifbar ist; und
- Greifen des Objekts (2) mittels der Greifeinrichtung (6) und Verlagern des Objektes aus dem Aufnahmebehälter (3) heraus.

2. Verfahren nach Anspruch 1, **dadurch gekennzeichnet, dass** das Hilfswerkzeug (11) an dem Roboterarm (4) lösbar angeordnet wird.

3. Verfahren nach Anspruch 2, **dadurch gekennzeichnet, dass** das Hilfswerkzeug (11) vor dem Verlagern des Objekts (2) an dem Roboterarm (4) lösbar angeordnet und nach dem Verlagern des Objekts (2) wieder vom Roboterarm (4) gelöst wird.

4. Verfahren nach Anspruch 3, **dadurch gekennzeichnet, dass** das Hilfswerkzeug (11) vor dem Verlagern des Objekts (2) mittels der Greifeinrichtung (6) gegriffen, während des Verlagerns des Objekts (2) von der Greifeinrichtung (6) gehalten und nach dem Verlagern des Objekts (2) zum Lösen von der Greifeinrichtung (6) wieder von der Greifeinrichtung (6) freigegeben wird.

5. Verfahren nach mindestens einem der vorangehenden Ansprüche, **dadurch gekennzeichnet, dass** beim Vereinzeln der Objekte (2) weiterhin Folgendes vorgesehen ist:
- Bestimmen mittels der Steuereinrichtung (8), ob für das Objekt (2) in der aktuellen Lage eine Objektart bestimmt werden kann, für welche in der Steuereinrichtung (8) die Objektart identifizierende Objektartdaten bereitgestellt werden;
- Bestimmen mittels der Steuereinrichtung (8), dass das Objekt (2) mittels der Greifeinrichtung (6) in seiner aktuellen Lage in dem Aufnahmebehälter (3) nicht greifbar ist, wenn für das Objekt (2) die Objektart nicht bestimmt werden kann und das Objekt (2) somit nicht greifbar ist;
- Bestimmen mittels der Steuereinrichtung (8), ob für das Objekt (2) in der geänderten Lage die Objektart bestimmt werden kann; und
- Greifen des Objekts (2) mittels der Greifeinrichtung (6) und Verlagern des Objekts (2) aus dem Aufnahmebehälter (3) heraus, wenn für das Objekt (2) in der geänderten Lage die Objektart bestimmt wird.

6. Verfahren nach mindestens einem der vorangehenden Ansprüche, **dadurch gekennzeichnet, dass** das Objekt (2) in dem Aufnahmebehälter (3) mit Hilfe der Erfassungseinrichtung mittels eines bildgebenden Verfahrens erfasst wird.

7. Verfahren nach mindestens einem der vorangehenden Ansprüche, **dadurch gekennzeichnet, dass** die Objekte (2) in dem Aufnahmebehälter (3) vor dem Vereinzeln einer zufälligen oder chaotischen Anordnung entsprechend angeordnet werden.

8. Verfahren nach mindestens einem der vorangehenden Ansprüche, **dadurch gekennzeichnet, dass** die Objekte in dem Aufnahmebehälter (3) Teile eines Schüttguts sind.

9. Verfahren nach mindestens einem der vorangehenden Ansprüche, **dadurch gekennzeichnet, dass** als Hilfswerkzeug (11) ein Flachwerkzeug verwendet wird, welches eingerichtet ist, das Objekt (2) insbesondere aus einer Randlage benachbart zu einer aufrechten Wandung des Aufnahmebehälters (3) oder einer Ecklage in dem Aufnahmebehälter (3) heraus zu verlagern.

10. Verfahren nach Anspruch 9, **dadurch gekennzeichnet, dass** als Flachwerkzeug ein Kratzwerkzeug verwendet wird.

11. Verfahren nach mindestens einem der vorangehenden Ansprüche, **dadurch gekennzeichnet, dass** die Greifeinrichtung (6) mit einem Parallelgreifer gebildet ist.

12. Vorrichtung zum roboterbasierten Vereinzeln von Objekten in einem Aufnahmebehälter (3), mit:
- einem Roboterarm (4);
- einer Greifeinrichtung (6), die an dem Roboterarm (4) angeordnet und mittels des Roboterarms (4) räumlich verlagerbar ist;
- einer Steuereinrichtung (8), die dem Roboterarm (4) mit der Greifeinrichtung (6) zum Steuern eines Betriebs zugeordnet ist; und
- eine Objekterkennungseinrichtung (9), die mit der Steuereinrichtung (8) gebildet und eingerichtet ist, in einem Aufnahmebehälter (3) angeordnete Objekte zu erfassen;
wobei die Vorrichtung eingerichtet ist, die Objekte (2) aus dem Aufnahmebehälter (3) zu vereinzeln, wobei die Objekte hierbei mit der an dem Roboterarm (4) angeordneten Greifeinrichtung (6) in dem Aufnahmebehälter (3) einzeln gegriffen, im gegriffenen Zustand mittels des Roboterarms (5) aus dem Aufnahmebehälter (3) entnommen und außerhalb des Aufnahmebehälters (3) von der Greifeinrichtung (6) zum Ablegen, Übergeben oder dergleichen freigegeben werden, und wobei die Vorrichtung zum Vereinzeln der Objekte (2) weiterhin für Folgendes eingerichtet ist:
- Erfassen von Messdaten für eines der Objekte (2) in einer aktuellen Lage in dem Aufnahmebehälter (3) mittels einer Objekterkennungseinrichtung (9) einer dem Roboterarm (4) mit der Greifeinrichtung (6) zugeordneten Steuereinrichtung (8);
- Bestimmen mittels der Steuereinrichtung (8), ob das Objekt (2) in der aktuellen Lage in dem Aufnahmebehälter (3) mittels der Greifeinrichtung (6) greifbar ist;
- Verlagern des Objekts (2) mit Hilfe eines Hilfswerkzeugs (11), welches an dem Roboterarm (4) angeordnet ist, aus der aktuellen Lage in eine geänderte Lage, die von der aktuellen Lage verschieden ist, in dem Aufnahmebehälter (3), wenn bestimmt wird, dass das Objekt (2) in der aktuellen Lage mittels der Greifeinrichtung (6) nicht greifbar ist, wobei das Hilfswerkzeug (11) zum Verlagern des Objekts (2) mittels des Roboterarms (4) bewegt wird;
- Erfassen von weiteren Messdaten für das Objekt (2) in der geänderten Lage mittels der Objekterkennungseinrichtung (9);
- Bestimmen mittels der Steuereinrichtung (8), dass das Objekt (2) mit Hilfe der Greifeinrichtung (6) in der geänderten Lage in dem Aufnahmebehälter (3) greifbar ist; und
- Greifen des Objekts (2) mittels der Greifeinrichtung (6) und Verlagern des Objektes (2) aus dem Aufnahmebehälter (3) heraus.
